(19) Europäisches Patentamt
European Patent Office
Office européen des brevets

(11) EP 0 602 716 B1

(12) # FASCICULE DE BREVET EUROPEEN

(45) Date de publication et mention de la délivrance du brevet:
**15.12.1999 Bulletin 1999/50**

(51) Int Cl.[6]: **C08F 10/00**

(21) Numéro de dépôt: **93203437.4**

(22) Date de dépôt: **08.12.1993**

(54) **Système catalytique, procédé pour sa préparation et son utilisation pour la (co)polymérisation d'oléfines**

Katalysatorsystem, Verfahren zur dessen Herstellung und seine Verwendung in der Olefinpolymerisation

Catalyst system, process for its production and its use in (co)polymerization of olefins

(84) Etats contractants désignés:
**AT BE DE ES FR GB IT NL PT SE**

(30) Priorité: **17.12.1992 BE 9201105**

(43) Date de publication de la demande:
**22.06.1994 Bulletin 1994/25**

(60) Demande divisionnaire: **98124378.5 / 0 908 468**

(73) Titulaire: **SOLVAY POLYOLEFINS EUROPE - BELGIUM (Société Anonyme)**
**1050 Bruxelles (BE)**

(72) Inventeur: **Zandona, Nicola**
**B-1410 Waterloo (BE)**

(74) Mandataire: **Destryker, Elise Martine et al**
**Solvay Polyolefins Europe-Belgium (Société Anonyme)**
**Département de la Propriété Industrielle**
**310, rue de Ransbeek**
**1120 Bruxelles (BE)**

(56) Documents cités:
**EP-A- 0 436 328**
**EP-A- 0 436 399**
**EP-A- 0 439 964**
**US-A- 5 032 562**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 602 716 B1

Printed by Jouve, 75001 PARIS (FR)

## Description

La présente invention concerne un système catalytique mixte pour la polymérisation d'oléfines, à base d'un métallocène ionique dérivé d'un métal de transition et d'un dérivé d'aluminium. L'invention concerne également un précurseur de ce système catalytique, un procédé de préparation d'un tel système catalytique ainsi qu'un procédé de polymérisation d'oléfines, utilisant ce système catalytique.

La demande de brevet EP-500944 (MITSUI TOATSU CHEMICALS) divulgue un procédé de polymérisation d'alpha-oléfines dans lequel on met en oeuvre un système catalytique obtenu en faisant réagir un composé organoaluminique avec un métallocène neutre halogéné dérivé d'un métal de transition et on mélange le produit ainsi obtenu avec un agent ionisant tel que le tétrakis(pentafluorophényl)borate de triphénylcarbénium.

Ce procédé connu présente l'inconvénient, lorsque de l'éthylène est polymérisé, de provoquer des croûtages dans les installations de polymérisation. Par ailleurs, il ne permet pas l'obtention de polymères ayant une large distribution des poids moléculaires et un poids spécifique apparent élevé.

La demande de brevet EP-436399 divulgue un système catalytique comprenant notamment [A] un solide catalytique contenant du titane, du magnésium et de l'halogène, [B-2] un métallocène contenant une partie anionique, et [D] un composé organoaluminique qui peut être de formule $R_nAlX_{3-n}$. Le rapport atomique halogène/titane dans le solide catalytique [A] est de 4 à 200.

L'invention remédie aux inconvénients précités en fournissant un système catalytique de constitution nouvelle qui réduit les risques de croûtage lors de son utilisation pour la polymérisation d'oléfines et qui permet par ailleurs d'obtenir des polymères caractérisés par un poids spécifique apparent plus élevé et de régler d'une manière précise la distribution des poids moléculaires des (co)polymères obtenus.

A cet effet, l'invention concerne un système catalytique comprenant (a) au moins un métallocène ionique dérivé d'un métal de transition, (b) au moins un solide catalytique contenant de 15 à 20 % en poids de titane, de 0,5 à 20 % en poids de magnésium et de 30 à 40 % en poids de chlore, et (c) au moins un dérivé d'aluminium de formule générale $AlX_nT_{3-n}$ dans laquelle X désigne un halogène, T désigne un radical hydrocarboné pouvant éventuellement comprendre de l'oxygène et n est un nombre de 0 à 3.

Dans le système catalytique selon l'invention, le dérivé d'aluminium de formule générale $AlX_nT_{3-n}$ peut par exemple être choisi parmi les trialkylaluminium et les composés haloalkylaluminiques. Des dérivés d'aluminium préférés sont ceux dont le groupe T est un radical hydrocarboné choisi parmi les groupes alkyle, alkényle, aryle et alkoxy éventuellement substitués, contenant jusqu'à 20 atomes de carbone, tels que le tributyl-, le triméthyl-, le triéthyl-, le tripropyl-, le triisopropyl-, le triisobutyl-, le trihexyl-, le trioctyl- et le tridodécylaluminium et le chlorure de diéthylaluminium. Les dérivés d'aluminium les plus avantageux sont le triéthylaluminium et le triisobutylaluminium.

Par l'expression "métallocène ionique" on entend désigner le produit issu du mélange d'un métallocène neutre avec un agent ionisant, tel que défini plus loin.

On peut citer comme exemples d'agents ionisants le tétrakis(pentafluorophényl)borate de triphénylcarbénium, le tétrakis(pentafluorophényl)borate de N,N-diméthylanilinium et le tétrakis(pentafluorophényl)borate de tri(n-butyl)ammonium.

Il peut également s'agir de tri(pentafluorophényl)bore, de triphénylbore, de triméthylbore, de tri(triméthylsilyl) borate et des organoboroxines. Ces derniers sont mis en oeuvre en l'absence d'un acide de Brönsted. Les agents ionisants préférés sont le tétrakis(pentafluorophényl)borate de triphénylcarbénium et le tri(pentafluorophényl)bore, ce dernier étant utilisé en l'absence d'un acide de Brönsted. Le tétrakis(pentafluorophényl)borate de triphénylcarbénium convient particulièrement bien.

Selon l'invention les métallocènes ioniques sont avantageusement dérivés de métallocènes neutres de formule $(C_p)_a(C_p')_bMX_xZ_z$, dans laquelle :

- $C_p$ et Cp' désignent chacun un radical hydrocarboné insaturé coordiné à un atome central, les groupes $C_p$ et $C_p'$ pouvant être liés par un pont covalent
- M désigne le métal de transition choisi parmi les groupes IIIB, IVB, VB et VIB du tableau périodique
- a, b, x et z désignent des nombres entiers tels que $(a + b + x + z) = m$ , $x \geq 0$, $z \geq 0$ et a et/ou $b \neq 0$
- m désigne la valence du métal de transition M
- X désigne un halogène, et
- Z désigne un radical hydrocarboné pouvant éventuellement comprendre de l'oxygène ou un radical silyl de formule $(-R_t\text{-}Si\text{-}R'R''R''')$ où
- R désigne un groupe alkyle, alkényle, aryle, alkoxy ou cycloalkyle éventuellement substitué, comprenant jusqu'à 20 atomes de carbone
- R', R" et R"' sont identiques ou différents et désignent chacun un halogène ou un groupe alkyle, alkényle, aryle, alkoxy ou cycloalkyle éventuellement substitué, comprenant jusqu'à 20 atomes de carbone
- t désigne 0 ou 1.

Le métal de transition du métallocène peut être avantageusement un élément sélectionné parmi le scandium, le titane, le zirconium, l'hafnium et le vanadium. Le zirconium est préféré.

Les groupes Cp et Cp' représentent chacun avantageusement un groupe mono- ou polycyclique comprenant de 5 à 50 atomes de carbone liés par des doubles liaisons conjuguées. Comme exemples typiques, on peut citer le radical cyclopentadiényle, indényle ou fluorényle ou un dérivé substitué de ce radical dans lequel au moins un atome d'hydrogène est substitué par un radical hydrocarboné comprenant jusqu'à 10 atomes de carbone. Il peut également s'agir d'un radical dérivé d'un élément choisi parmi le groupe VA du tableau périodique, par exemple l'azote ou le phosphore.

On peut citer comme exemples de métallocènes neutres de formule $(C_p)_a(C_p')_bMX_xZ_z$, les métallocènes de scandium non halogénés, mono- et dihalogénés tels que le méthyldi(cyclopentadiényl)scandium, le chloro(cyclopentadiényl)éthylscandium, le chlorodi(cyclopentadiényl)scandium et le dichloro(indényl)scandium, les métallocènes de titane non halogénés, mono-, di- et trihalogénés tels que le diéthyldi(fluorényl)titane, le dibromo(méthylcyclopentadiényl)butyltitane, le chloro(indényl)-diisopropyltitane, le chlorométhyldi(pentaméthylcyclopentadiényl)titane, le dibromodi(méthylcyclopentadiényl)titane et le trichloro(cyclopentadiényl)titane, les métallocènes de zirconium non halogénés, mono-, di- et trihalogénés tels que le diméthyl(fluorénylindényl)zirconium, le dichloro(fluorényl)hexylzirconium, le iodotri(cyclopentadiényl)zirconium, le dibromo(cyclopentadiényl-1-indényl)zirconium, le trichloro(fluorényl)-zirconium, les métallocènes d'hafnium non halogénés, mono-, di- et trihalogénés, les métallocènes de vanadium non halogénés, mono-, di- et trihalogénés tels que le chlorotri(cyclopentadiényl)vanadium, le dichlorodi(éthylcyclopentadiényl)vanadium et le trichloro(éthylindényl)vanadium, les métallocènes de chrome trivalents non halogénés, mono- et dihalogénés tels que le dichloro(cyclopentadiényl)chrome.

Dans le cas où Z est un radical silyl de formule (-$R_t$-Si-R'R''R'''), les métallocènes neutres de formule $(C_p)_a(C_p')_bMX_xZ_z$ peuvent par exemple être choisis parmi ceux comprenant comme radical silyl, l'allyldiméthylchlorosilyl, l'allylméthyldiéthoxysilyl, le 5-(dicycloheptényl)trichlorosilyl, le 2-bromo-3-triméthylsilyl-1-propényl, le 3-chloropropyldiméthylvinylsilyl, le 2-(3-cyclohexényl)éthyltriméthoxysilyl et le diphénylvinylchlorosilyl.

Les métallocènes ayant un pont covalent connectant les deux groupes $C_p$ et $C_p'$ peuvent être choisis parmi ceux de formule générale :

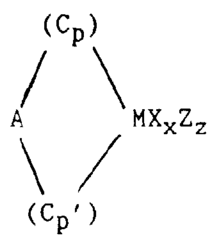

dans laquelle A représente un groupe alkylène pouvant éventuellement comprendre de l'oxygène, alkénylène, arylalkylène, alkyl arylène, arylalkénylène, éventuellement halogéné ou un radical dérivé d'un élément choisi parmi les groupes IIIA, IVA, VA et VIA du tableau périodique, tel que le bore, l'aluminium, le silicium, le germanium, l'étain, l'azote, le phosphore ou le soufre. On peut citer comme exemple de métallocènes pontés, ceux répondant aux formules :

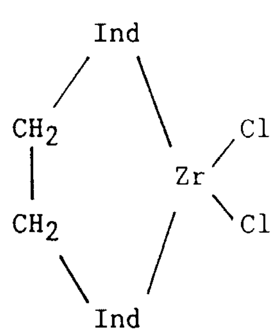 , 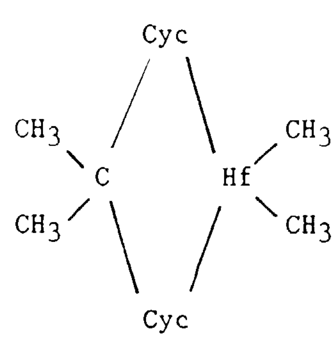 ,

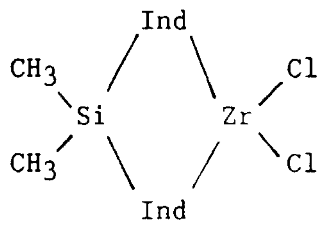 , 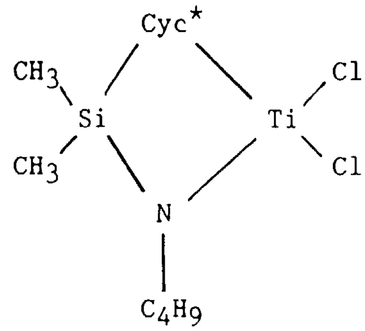 ,

dans lesquelles Ind représente le radical indényle, Cyc représente le radical cyclopentadiényle et Cyc* représente le radical pentaméthylcyclopentadiényle.

Les métallocènes de formule $(C_p)_a(C_p')_bMX_xZ_z$ préférés sont ceux dans lesquels les groupes $C_p$ et $C_p'$ sont choisis parmi les radicaux cyclopentadiényle, indényle et fluorényle. De bons résultats sont obtenus avec ceux dont les groupes Cp et Cp' sont liés par un pont covalent du type alkyle. Les métallocènes dont le métal de transition est choisi parmi le titane, le zirconium et l'hafnium conviennent très bien. On obtient des résultats particulièrement satisfaisants avec les métallocènes dérivés du zirconium.

Le solide catalytique est un catalyseur de la polymérisation d'oléfines, obtenu en mélangeant un composé de magnésium avec un composé de titane et un composé chloré. Le composé chloré peut éventuellement faire partie intégrante du composé de magnésium ou du composé de titane.

Comme composés de magnésium utilisables pour la préparation du solide catalytique, on peut citer, à titre d'exemples non limitatifs, les halogénures, l'hydroxyde, l'oxyde, les hydroxyhalogénures, les alcoolates, les haloalcoolates, les arylalcoolates, les haloarylalcoolates, les alkylhalogénures de magnésium et leurs mélanges.

Des composés de titane utilisables pour la synthèse du solide catalytique sont les tétrahalogénures, les alcoolates, les alcoolates halogénés, les trihalogénures obtenus par réduction de tétrahalogénures au moyen d'un composé organoaluminique, ou leurs mélanges. On peut citer comme exemple le $TiCl_4$, et le $Ti(OC_2H_5)_3Br$.

Dans le cas où le composé chloré ne fait pas partie intégrante du composé de magnésium ou du composé de titane, il peut par exemple être choisi parmi les dérivés chlorés d'aluminium de formule $AlT_yX_{3-y}$ dans laquelle T représente un radical hydrocarboné pouvant éventuellement comprendre de l'oxygène, y désigne un nombre entier de 0 à 2 et X représente du chlore. On peut citer comme exemples typiques le dichlorure d'éthylaluminium, le chlorure de dipropylaluminium et le trichlorure d'aluminium. Le composé chloré peut également être sélectionné parmi les dérivés chlorés de silicium tels que par exemple $SiCl_4$, $(C_2H_5O)_2SiCl_2$ ou $(CH_3)_3SiCl$.

La fabrication du solide catalytique peut également impliquer l'emploi d'un donneur d'électrons tel que les acides carboxyliques, les esters, les éthers et les alcools. Ce donneur d'électrons est généralement choisi parmi ceux comprenant jusqu'à 12 atomes de carbone. Il est avantageusement utilisé pour prétraiter le composé de magnésium.

Un exemple typique de synthèse du solide catalytique consiste à mélanger un chlorure de titane avec un composé oxygéné de magnésium tel que décrit dans les brevets BE-705220 (SOLVAY & CIE) et BE-730068 (SOLVAY & CIE). Selon un autre exemple, on précipite un mélange d'un composé oxygéné de titane et d'un composé oxygéné du magnésium au moyen d'un composé chloré, tel que décrit dans le brevet BE-791676 (SOLVAY).

Les solides catalytiques selon l'invention comprennent du titane et du chlore. Les meilleurs résultats sont obtenus avec les solides catalytiques présentant une teneur en titane d'environ 17 %, une teneur en chlore d'environ 36 % et une teneur en magnésium de 1 à 10 %, par exemple environ 5 %.

Il va de soi que le système catalytique selon l'invention peut comprendre plus d'un métallocène ionique et plus d'un solide catalytique et plus d'un composé organoaluminique.

Des systèmes catalytiques conformes à l'invention ayant conduit à de bons résultats sont ceux qui présentent un rapport pondéral du métal de transition au titane du solide catalytique au minimum égal à 0,05, de préférence à 0,1, par exemple à 0,5; il est habituellement au maximum égal à 10, en particulier à 5, par exemple à 2.

Selon une variante avantageuse du système catalytique selon l'invention, celui-ci comprend un support minéral. Le support minéral peut être sélectionné parmi les oxydes minéraux tels que les oxydes de silicium, d'aluminium, de titane, de zirconium, de thorium, leurs mélanges et les oxydes mixtes de ces métaux tels que le silicate d'aluminium et le phosphate d'aluminium, et parmi les halogénures minéraux tels que le chlorure de magnésium. La silice, l'alumine, le chlorure de magnésium et les mélanges de silice et de chlorure de magnésium sont préférés.

La présente invention a également pour objet un procédé de préparation d'un système catalytique convenant pour la polymérisation d'oléfines, qui comprend au moins un dérivé d'aluminium de formule générale $AlX_nT_{3-n}$, dans

laquelle X désigne un halogène, T désigne un radical hydrocarboné pouvant éventuellement comprendre de l'oxygène et n est un nombre de 0 à 3, au moins un agent ionisant et au moins un métallocène neutre dérivé d'un métal de transition dans lequel on prépare, dans une première étape, un mélange du métallocène neutre avec un solide catalytique contenant de 15 à 20 % en poids de titane, de 0,5 à 20 % en poids de magnésium et de 30 à 40 % en poids de chlore, et on ajoute, dans une deuxième étape, au mélange ainsi obtenu un dérivé d'aluminium dans au moins un diluant hydrocarboné et un agent ionisant.

Dans le procédé de préparation d'un système catalytique selon l'invention le métallocène neutre, le solide catalytique et le dérivé d'aluminium sont conformes à ceux décrits ci-dessus.

Dans le procédé de préparation d'un système catalytique selon l'invention on entend désigner par agent ionisant un composé comprenant une première partie qui présente les propriétés d'un acide de Lewis et qui est capable d'ioniser le métallocène neutre et une deuxième partie qui est inerte vis-à-vis du métallocène ionisé et qui est capable de stabiliser le métallocène ionisé. L'agent ionisant peut être un composé ionique comprenant un cation présentant les propriétés d'un acide de Lewis et un anion constituant la deuxième partie précitée de l'agent ionisant. Les anions ayant conduit à de très bons résultats sont les organoborates. On entend désigner par organoborate un dérivé du bore dans lequel l'atome de bore est lié à 4 substituants organiques. On peut citer comme exemples d'agents ionisants ioniques le tétrakis(pentafluorophényl)borate de triphénylcarbénium, le tétrakis(pentafluorophényl)borate de N,N-diméthylanilinium et le tétrakis(pentafluorophényl)borate de tri(n-butyl)ammonium. Les acides de Lewis cationiques préférés sont le carbénium, le sulfonium et l'oxonium.

En variante, l'agent ionisant peut également être un composé nonionique présentant les propriétés d'un acide de Lewis qui est capable de transformer le métallocène neutre en métallocène cationique. A cet effet, l'agent ionisant est lui-même transformé en un anion inerte vis-à-vis du métallocène cationique qui est capable de stabiliser celui-ci. On peut citer comme exemples d'agent ionisant nonionique, le tri(pentafluorophényl)bore, le triphénylbore, le triméthylbore, le tri(triméthylsilyl)borate et les organoboroxines. Les agents ionisants nonioniques sont mis en oeuvre en l'absence d'un acide de Brönsted.

L'agent ionisant est de préférence sélectionné parmi le tétrakis(pentafluorophényl)borate de triphénylcarbénium et le tri(pentafluorophényl)bore.

La première étape du procédé de préparation d'un système catalytique selon l'invention consiste à mélanger le métallocène neutre avec le solide catalytique. Ce mélange peut être effectué par voie sèche en mélangeant les constituants à l'état solide. Il peut également être réalisé par imprégnation du solide catalytique avec une solution du métallocène neutre dans un diluant hydrocarboné. La suspension ainsi obtenue peut être utilisée telle quelle à l'étape suivante. En variante, le solide catalytique imprégné du métallocène neutre peut être recueilli de la suspension et mis en oeuvre à l'étape suivante à l'état solide.

Cette première étape peut être effectuée à toute température inférieure à la température de décomposition du métallocène neutre et du solide catalytique. La température est habituellement comprise entre la température ambiante et 100 °C, de préférence de 50 à 85 °C.

Dans cette première étape, le métallocène neutre et le solide catalytique sont avantageusement mis en oeuvre en des quantités telles que le rapport pondéral du métallocène neutre au solide catalytique soit généralement au moins égal à 0,01, en particulier à 0,1; il est habituellement au maximum égal à 20, de préférence à 10, les valeurs de 0,3 à 5, typiquement environ 2, étant les plus avantageuses.

Le mélange préparé au cours de la première étape du procédé de préparation d'un système catalytique selon l'invention peut comprendre plus d'un métallocène neutre et plus d'un solide catalytique.

La deuxième étape du procédé de préparation d'un système catalytique suivant l'invention consiste à mettre le mélange obtenu à la première étape en contact avec le dérivé d'aluminium dans au moins un diluant hydrocarboné et avec l'agent ionisant. Le dérivé d'aluminium a pour fonction de servir de cocatalyseur du système catalytique au cours de son utilisation pour la polymérisation d'oléfines. Dans le cas où le métallocène neutre mis en oeuvre à la première étape est halogéné, le dérivé d'aluminium comprend au moins un radical hydrocarboné. Dans ce cas, le dérivé d'aluminium a également pour fonction de substituer, à la deuxième étape du procédé selon l'invention, au moins un des halogènes du métallocène neutre par un radical hydrocarboné. Dans ce cas, il est souhaitable d'ajouter d'abord le dérivé d'aluminium au mélange issu de la première étape, puis l'agent ionisant. Dans le cas où le métallocène neutre mis en oeuvre à la première étape est non halogéné, il peut s'avérer avantageux d'ajouter le dérivé d'aluminium au moment de l'utilisation du système catalytique dans un procédé de polymérisation d'oléfines.

Le diluant hydrocarboné utilisable dans cette deuxième étape peut être choisi parmi les hydrocarbures aliphatiques tels que les alcanes linéaires (par exemple le n-butane, le n-hexane et le n-heptane), les alcanes ramifiés (par exemple l'isobutane, l'isopentane, l'isooctane et le 2,2-diméthylpropane), les cycloalcanes (par exemple le cyclopentane et le cyclohexane), parmi les hydrocarbures aromatiques monocycliques tels que le benzène et ses dérivés, par exemple le toluène, et parmi les hydrocarbures aromatiques polycycliques, chaque cycle pouvant être substitué. On peut bien entendu utiliser simultanément plusieurs diluants hydrocarbonés. Le toluène convient bien.

La quantité du dérivé d'aluminium mise en oeuvre à la deuxième étape, par rapport à celle du métallocène

neutre, dépend du choix de ces composés. En pratique, dans le cas où le métallocène neutre est halogéné, on a intérêt à utiliser le dérivé d'aluminium en une quantité suffisante pour substituer la totalité des atomes d'halogènes du métallocène neutre. Il peut être avantageux d'utiliser des quantités supérieures du dérivé d'aluminium pour bénéficier de ses propriétés de capteur d'impuretés au cours de la fabrication du système catalytique. A cet effet, on recommande par exemple que le rapport molaire du dérivé d'aluminium au métallocène neutre soit au moins égal à 10. Afin de bénéficier également des propriétés précitées du dérivé d'aluminium au cours de l'utilisation du système catalytique dans un procédé de polymérisation d'oléfine, dans lequel le dérivé d'aluminium joue également le rôle de cocatalyseur du solide catalytique, on recommande que le rapport molaire du dérivé d'aluminium au métallocène neutre soit au moins égal à 100. En principe, il n'y a pas de limite supérieure au rapport molaire précité. En pratique toutefois, on n'a pas intérêt à ce que ce rapport excède 5000 pour des raisons économiques, les valeurs inférieures à 2000 étant recommandées. Des valeurs voisines de 500 à 1000 conviennent généralement bien.

Dans cette deuxième étape du procédé de préparation d'un système catalytique selon l'invention, l'agent ionisant est de préférence mis en oeuvre en une quantité suffisante pour ioniser la totalité du métallocène. La quantité d'agent ionisant à mettre en oeuvre va dès lors dépendre du métallocène neutre et de l'agent ionisant sélectionnés. En général, on peut utiliser une quantité d'agent ionisant telle que le rapport molaire de l'agent ionisant au métallocène neutre mis en oeuvre à la première étape précitée soit au moins égale à 0,1, en particulier au moins égale à 0,5, les valeurs ne dépassant pas 10 étant préférées, celles ne dépassant pas 2 étant recommandées.

Cette deuxième étape du procédé de préparation d'un système catalytique selon l'invention peut être effectuée à toute température qui est à la fois inférieure à la température d'ébullition du composé le plus volatile du milieu obtenu à la pression de travail et inférieure à la température de décomposition thermique des composants du milieu. Par milieu on entend désigner l'ensemble des composants mis en oeuvre à la deuxième étape (métallocène neutre, solide catalytique, dérivé d'aluminium, diluant hydrocarboné et agent ionisant) et recueillis à l'issue de celle-ci. La température dépend dès lors de la nature des composants du milieu et est généralement supérieure à -50 °C, de préférence au moins égale à 0 °C. Elle est habituellement au maximum égale à 100 °C, de préférence inférieure à 80 °C. La température ambiante convient particulièrement bien.

La durée de cette deuxième étape doit être suffisante pour obtenir une ionisation complète du métallocène ou du produit de sa réaction avec le dérivé d'aluminium. Elle peut varier de quelques secondes à plusieurs heures. Les réactions à la deuxième étape étant en général quasi-instantanées, les durées de 0,5 à 30 minutes sont les plus courantes. Le milieu peut être agité pendant toute la durée de la deuxième étape ou pendant une partie de celle-ci.

A la deuxième étape du procédé de préparation d'un système catalytique selon l'invention, on peut mettre en oeuvre plus d'un dérivé d'aluminium et plus d'un agent ionisant. A l'issue de la deuxième étape, on peut isoler le système catalytique à l'état solide de la suspension.

Dans une première forme d'exécution du procédé de préparation d'un système catalytique selon l'invention, la première étape est opérée par voie sèche en mélangeant le solide catalytique et le métallocène neutre à l'état solide et on met le mélange solide ainsi obtenu en oeuvre à la deuxième étape.

Dans une variante de cette première forme d'exécution, le métallocène neutre et le solide catalytique sont broyés ensemble à l'état solide pendant qu'on les mélange.

Dans une deuxième forme d'exécution du procédé de préparation d'un système catalytique selon l'invention, le solide catalytique est imprégné avec une solution du métallocène neutre. A cet effet, on le dissout au préalable dans un hydrocarbure aromatique, de préférence le toluène. Dans cette forme d'exécution le solide catalytique imprégné est recueilli de la suspension et mis en oeuvre à l'état solide dans l'étape suivante.

Dans une troisième forme d'exécution du procédé de préparation d'un système catalytique suivant l'invention, on recueille un solide résultant de la mise en contact du dérivé d'aluminium avec le mélange issu de la première étape et on ajoute ensuite l'agent ionisant à ce solide.

Dans le procédé de préparation d'un système catalytique selon l'invention, l'agent ionisant peut être mis en oeuvre à l'état solide ou à l'état liquide, par exemple à l'état d'une solution.

Dans une quatrième forme d'exécution du procédé de préparation d'un système catalytique selon l'invention, où l'agent ionisant est mis en oeuvre sous forme d'une solution, la deuxième étape du procédé est précédée d'une dissolution de l'agent ionisant dans un diluant hydrocarboné. Le diluant hydrocarboné peut être sélectionné parmi les hydrocarbures aromatiques tels que le toluène et les hydrocarbures aliphatiques halogénés tels que le chlorure de méthylène et le chloroforme. Le toluène convient bien. Dans cette forme d'exécution, la quantité du diluant hydrocarboné mise en oeuvre doit être suffisante pour y permettre une dissolution complète de l'agent ionisant. La quantité du diluant hydrocarboné dépend dès lors de sa nature, de la nature de l'agent ionisant et de la température à laquelle la deuxième étape du procédé est effectuée.

Dans une cinquième forme d'exécution du procédé de préparation d'un système catalytique selon l'invention, le métallocène neutre est déposé sur un support minéral. Le support minéral peut être sélectionné parmi les oxydes minéraux tels que les oxydes de silicium, d'aluminium, de titane, de zirconium, de thorium, leurs mélanges et les oxydes mixtes de ces métaux tels que le silicate d'aluminium et le phosphate d'aluminium, et parmi les halogénures métalliques

tels que le chlorure de magnésium. La silice, l'alumine, le chlorure de magnésium et les mélanges de silice et de chlorure de magnésium sont préférés.

Dans une première variante de cette cinquième forme d'exécution, on imprègne le support minéral, éventuellement activé au préalable par tout moyen connu, avec une solution du métallocène neutre. La solution peut être préparée comme dans la deuxième forme d'exécution du procédé selon l'invention, explicitée plus haut. La température opératoire de l'imprégnation peut varier de la température ambiante à la température d'ébullition de la solution du métallocène neutre et la durée de l'imprégnation peut varier de quelques minutes à plusieurs heures. Dans cette forme d'exécution, le support minéral imprégné du métallocène neutre est recueilli de la suspension, puis mélangé au solide catalytique au cours de la première étape explicitée plus haut.

Dans une deuxième variante de cette cinquième forme d'exécution, le support minéral et le métallocène neutre sont mélangés à l'état solide (éventuellement en les co-broyant). Le mélange solide ainsi obtenu est ensuite mis en oeuvre à la première étape explicitée plus haut.

Dans une sixième forme d'exécution du procédé de préparation d'un système catalytique selon l'invention, l'agent ionisant est déposé sur un support minéral. A cet effet, on imprègne le support minéral, éventuellement activé au préalable par tout moyen connu, avec une solution de l'agent ionisant. La solution peut être préparée comme dans la quatrième forme d'exécution du procédé selon l'invention explicitée plus haut. Le support minéral et les conditions opératoires de l'imprégnation sont conformes à ce qui a été décrit ci-dessus dans la cinquième forme d'exécution du procédé selon l'invention.

Dans une septième forme d'exécution du procédé de préparation d'un système catalytique selon l'invention qui est particulièrement performante, on mélange à l'état sec le solide catalytique avec un support minéral et on met le mélange ainsi obtenu en oeuvre à la première étape du procédé selon l'invention. Le support minéral est conforme à celui utilisé dans la cinquième forme d'exécution du procédé explicitée ci-dessus.

Dans une huitième forme d'exécution du procédé de préparation d'un système catalytique selon l'invention, on met en oeuvre un métallocène neutre de formule $(C_p)_a(C_p')_bMX_x(\text{-}R_t\text{-Si-}R'R''R''')_z$, que l'on a préparé en faisant réagir avec un silane un composé de formule $(C_p)_a(C_p')_bMX_xH_z$ où les symboles Cp, Cp', M, X, H, a, b, x et z ont la même signification que celle donnée ci-avant, à l'exception de z qui est plus grand que zéro. On fait la réaction de préférence dans un solvant adéquat.

Des composés de formule $(C_p)_a(C_p')_bMX_xH_z$, ayant conduit à de très bons résultats, sont notamment ceux dérivés du zirconium, du titane et de l'hafnium, dont $C_p$ et $C_p$' sont choisis parmi les radicaux cyclopentadiényle, indényle et fluorényle. On utilise de préférence ceux dérivés du zirconium. De préférence X représente le chlore. Comme exemples de silanes utilisables dans cette forme d'exécution, on peut citer l'allyldiméthylchlorosilane, l'allylméthyldiéthoxysilane, le 5-(dicycloheptényl)-trichlorosilane, le 2-bromo-3-triméthylsilyl-1-propène, le 3-chloropropyldiméthylvinylsilane, le 2-(3-cyclohexényl)éthyltriméthoxysilane, le diphénylvinylchlorosilane, le vinyltriphénoxysilane, le vinyltrichlorosilane, le 2-(triméthylsilylméthyl)-1,3-butadiène et le 3-(triméthylsilyl)cyclopentène. Les silanes préférés sont les alkénylsilanes non chlorés tels que l'allyltriéthoxysilane, l'allyltriméthylsilane, le 5-(bicycloheptényl)triéthoxysilane, le vinyl (triméthoxy)silane et le 2-(3-cyclohexényl)éthyltriméthoxysilane. Le vinyl(triméthoxy)-silane convient particulièrement bien. Le solvant de la réaction entre le silane et le composé de formule $(C_p)_a(C_p')_bMX_xH_z$ est avantageusement un hydrocarbure aromatique, de préférence le toluène. La température à laquelle cette réaction est effectuée peut varier de la température ambiante jusqu'à la température d'ébullition du solvant utilisé, par exemple de 20 à 100 °C. La température préférée est la température ambiante.

Dans une neuvième forme d'exécution du procédé de préparation d'un système catalytique selon l'invention, on met en oeuvre un métallocène neutre de formule $(C_p)_a(C_p')_bMX_xZ_z$, où les symboles Cp, Cp', M, X, Z, a, b, x et z ont la même signification que celle donnée ci-avant, dans laquelle z est différent de O et Z est un radical hydrocarboné que l'on a préparé en faisant réagir un composé de formule $(C_p)_a(C_p')_bMX_xH_z$ avec une oléfine. Cette réaction a lieu de préférence dans un solvant adéquat. Les composés de formule $(C_p)_a(C_p')_bMX_xH_z$ sont conformes à ceux définis ci-dessus dans la huitième forme d'exécution. Les oléfines utilisables dans cette forme d'exécution contiennent avantageusement jusqu'à 20 atomes de carbone, de préférence jusqu'à 12 atomes de carbone, et peuvent être choisies parmi les mono-oléfines telles que l'éthylène et le 3-éthyl-1-butène, les dioléfines non conjuguées telles que le 1,5-hexadiène, les dioléfines conjuguées telles que le 1,3-pentadiène et les dioléfines alicycliques telles que le dicyclopentadiényle. L'oléfine préférée est l'éthylène. Le solvant de la réaction entre l'oléfine et le composé de formule $(C_p)_a(C_p')_bMX_xH_z$ est avantageusement un hydrocarbure aromatique, de préférence le toluène. La température à laquelle cette réaction est effectuée peut varier de la température ambiante jusqu'à la température d'ébullition du solvant utilisé, par exemple de 20 à 100 °C. La température préférée est la température ambiante.

Ces deux dernières formes d'exécution du procédé selon l'invention permettent de fabriquer des systèmes catalytiques au départ d'hydrures de métallocènes de formule $(C_p)_a(C_p')_bMX_xH_z$ dans laquelle z est différent de 0, qui sont en général difficiles à manipuler à cause de leur caractère polymérique et de la difficulté de les solubiliser économiquement.

Le procédé de préparation du système catalytique selon l'invention permet d'obtenir des systèmes catalytiques mixtes à base d'un métallocène ionique et d'un solide catalytique contenant au moins un élément du groupe IVB du tableau périodique, du magnésium et un halogène.

La présente invention a également pour objet un précurseur d'un système catalytique comprenant (a) au moins un métallocène neutre dérivé d'un métal de transition, (b) au moins un solide catalytique contenant de 15 à 20 % en poids de titane, de 0,5 à 20 % en poids de magnésium et de 30 à 40 % en poids de chlore, et (c) au moins un dérivé d'aluminium de formule générale $AlX_nT_{3-n}$ dans laquelle X désigne un halogène, T désigne un radical hydrocarboné pouvant éventuellement comprendre de l'oxygène, et n est un nombre de 0 à 3.

Le système catalytique selon l'invention peut être utilisé pour l'homopolymérisation et la copolymérisation d'oléfines contenant jusqu'à 20 atomes de carbone par molécule. Les oléfines contiennent avantageusement de 2 à 12 atomes de carbone par molécule et sont par exemple choisies parmi l'éthylène, le propylène, le 1-butène, le 1-pentène, le 3-méthyl-1-butène, le 1-hexène, les 3- et 4-méthyl-1-pentènes, le 1-octène, le 3-éthyl-1-butène, le 1-heptène, le 3,4-diméthyl-1-hexène, le 4-butyl-1-octène, le 5-éthyl-1-décène et le 3,3-diméthyl-1-butène, et les monomères vinyliques tels que le styrène. Les systèmes catalytiques selon l'invention trouvent une utilisation particulière dans la production d'homopolymères de l'éthylène et du propylène, ou de copolymères de l'éthylène et du propylène avec un ou plusieurs comonomères oléfiniquement insaturés. Les comonomères peuvent être de matières diverses. Ils peuvent être des mono-oléfines pouvant comprendre jusqu'à 8 atomes de carbone, par exemple le 1-butène, le 1-pentène, le 3-méthyl-1-butène, le 1-hexène, les 3- et 4-méthyl-1-pentènes et le 1-octène. Une ou plusieurs dioléfines comprenant de 4 à 18 atomes de carbone peuvent également être copolymérisées avec l'éthylène et le propylène. De préférence, les dioléfines sont choisies parmi les dioléfines aliphatiques non conjuguées telles que le 4-vinyl-cyclohexène et le 1,5-hexadiène, les dioléfines alicycliques ayant un pont endocyclique telles que le dicyclopentadiène, le méthylène- et l'éthylidène-norbornène, et les dioléfines aliphatiques conjuguées telles que le 1,3-butadiène, l'isoprène et le 1,3-pentadiène.

Le système catalytique selon l'invention apparaît particulièrement performant pour la fabrication d'homopolymères de l'éthylène ou du propylène, et de copolymères de l'éthylène ou du propylène contenant au moins 90 %, de préférence au moins 95 %, en poids d'éthylène ou de propylène. Les comonomères préférés de l'éthylène sont le propylène, le 1-butène, le 1-hexène, le 1-octène et le 1,5-hexadiène, et ceux du propylène sont l'éthylène, le 1,3-butadiène, le 1,5-hexadiène.

L'invention concerne dès lors également l'utilisation du système catalytique selon l'invention pour la (co)polymérisation d'oléfines.

L'invention concerne aussi un procédé de (co)polymérisation d'au moins une oléfine en présence d'un système catalytique comprenant au moins un dérivé d'aluminium de formule générale $AlX_nT_{3-n}$, dans laquelle X désigne un halogène, T désigne un radical hydrocarboné pouvant éventuellement comprendre de l'oxygène et n est un nombre de 0 à 3, au moins un agent ionisant et au moins un métallocène neutre dérivé d'un métal de transition dans lequel on prépare un mélange du métallocène neutre avec un solide catalytique contenant de 15 à 20 % en poids de titane, de 0,5 à 20 % en poids de magnésium et de 30 à 40 % en poids de chlore, on met le mélange ainsi obtenu en contact avec au moins un diluant hydrocarboné, le dérivé d'aluminium et l'oléfine, et on y ajoute l'agent ionisant.

Dans le procédé de (co)polymérisation selon l'invention, le dérivé d'aluminium, le métallocène neutre, l'agent ionisant, le solide catalytique et le diluant hydrocarboné sont conformes à ceux utilisés dans le procédé selon l'invention de préparation du système catalytique explicité plus haut. On utilise de préférence l'isobutane ou l'hexane comme diluant hydrocarboné. L'isobutane convient praticulièrement bien.

Dans le procédé de (co)polymérisation selon l'invention, l'oléfine est conforme à la définition fournie plus haut des oléfines polymérisables en présence des systèmes catalytiques selon l'invention.

Dans le procédé de (co)polymérisation selon l'invention, la préparation du mélange du métallocène neutre et du solide catalytique, et l'ajout de l'agent ionisant sont réalisés respectivement comme dans la première et la deuxième étape du procédé de préparation du système catalytique décrit plus haut, préférentiellement dans le réacteur de polymérisation.

Dans le procédé de (co)polymérisation selon l'invention, à partir du moment où on ajoute l'oléfine dans le réacteur de polymérisation, des chaînes polymériques se forment en présence du solide catalytique, activé par le dérivé d'aluminium jouant le rôle de cocatalyseur. Cette formation de chaînes polymériques se poursuit jusqu'à l'épuisement de l'activité du solide catalytique et/ou de l'alimentation de l'oléfine. Par ailleurs, dès qu'on ajoute l'agent ionisant dans le réacteur de polymérisation, un autre type de chaîne polymérique se forme catalysée par le métallocène ionique (activé par le dérivé d'aluminium et par l'agent ionisant). Ainsi, le produit polymérique final est constitué d'au moins deux types de chaînes polymériques dans des proportions que l'on peut faire varier selon les quantités du solide catalytique, du métallocène neutre et de l'agent ionisant mises en oeuvre et selon le moment d'introduction de l'agent ionisant.

Dans une première forme de réalisation du procédé de (co)polymérisation selon l'invention, on met d'abord le mélange du métallocène neutre et du solide catalytique en contact avec le dérivé d'aluminium dans le réacteur de polymérisation et ensuite on y introduit l'oléfine. A cet effet, la mise en contact avec le composé organoaluminique

peut être réalisée comme dans la deuxième étape du procédé selon l'invention de préparation du système catalytique décrit plus haut.

Dans une deuxième forme de réalisation, le dérivé d'aluminium et l'oléfine sont mis en contact avec le mélange du métallocène neutre et du solide catalytique simultanément en les introduisant en même temps dans le réacteur de polymérisation, et ensuite l'agent ionisant y est ajouté.

Dans une variante de cette deuxième forme de réalisation, qui est particulièrement préférée, on prépare au préalable un mélange d'une solution du dérivé d'aluminium dans le diluant hydrocarboné et de l'oléfine, auquel on ajoute le mélange du métallocène neutre et du solide catalytique, et ensuite l'agent ionisant.

Dans une troisième forme de réalisation du procédé de (co)polymérisation selon l'invention, l'agent ionisant et l'oléfine sont introduits simultanément dans le réacteur de polymérisation.

Dans une variante de cette troisième forme de réalisation, on prépare au préalable un mélange comprenant l'oléfine, l'agent ionisant et le dérivé d'aluminium, auquel on ajoute le mélange du métallocène neutre et du solide catalytique.

Dans une quatrième forme de réalisation, l'agent ionisant est introduit dans le réacteur de polymérisation après que l'activité du solide catalytique soit réduite d'au moins 50 %, de préférence d'au moins 75 % de sa valeur initiale. Par activité du solide catalytique, on entend désigner la quantité de polymère obtenu, exprimée en grammes, en présence du solide catalytique par heure et par gramme de solide catalytique.

Dans une variante de cette quatrième forme de réalisation du procédé de (co)polymérisation suivant l'invention, on met en oeuvre le métallocène neutre et le solide catalytique en des quantités telles que le rapport pondéral du métallocène neutre au solide catalytique soit de 1 à 20. Cette variante de l'invention s'avère particulièrement avantageuse lorsqu'on souhaite limiter les phénomènes de croûtage dans le réacteur de polymérisation et favoriser la formation de (co)polymères de poids spécifique apparent élevé. En effet, du fait de la faible quantité de solide catalytique relative à celle du métallocène, cette variante permet, après l'introduction de l'oléfine et avant l'ajout de l'agent ionisant, d'enrober les sites catalytiques du métallocène, qui ne seront activés que lorsqu'on y ajoute l'agent ionisant, conduisant ainsi aux avantages mentionnés ci-dessus.

Dans une cinquième forme de réalisation du procédé de (co)polymérisation suivant l'invention, on met en oeuvre le métallocène neutre et le solide catalytique en des quantités telles que le rapport molaire du métallocène neutre au solide catalytique soit de 0,01 à 1. Cette forme de réalisation apparaît particulièrement performante lorsqu'on souhaite obtenir des (co)polymères ayant une distribution des poids moléculaires large tout en limitant leur teneur en oligomères.

Dans une sixième forme de réalisation du procédé de (co)polymérisation suivant l'invention, le métallocène neutre ou l'agent ionisant est déposé sur un support minéral. Le support minéral est conforme à celui utilisé dans la cinquième forme de réalisation du procédé selon l'invention de préparation du système catalytique.

Dans une première variante de cette sixième forme de réalisation du procédé de (co)polymérisation selon l'invention, on imprègne le support minéral avec une solution du métallocène neutre (respectivement de l'agent ionisant) comme décrit dans la deuxième (respectivement la quatrième) forme d'exécution du procédé selon l'invention de préparation du système catalytique.

Dans une deuxième variante de cette sixième forme de réalisation du procédé de (co)polymérisation selon l'invention, le support minéral et le métallocène neutre (respectivement l'agent ionisant) sont mélangés (éventuellement en les co-broyant) à l'état solide.

Dans une variante particulièrement avantageuse de cette sixième forme d'exécution du procédé de (co)polymérisation suivant l'invention, le solide catalytique est mélangé avec un support minéral avant de mettre ce mélange en contact avec le métallocène neutre. Le support minéral est conforme à celui utilisé comme support pour le métallocène neutre décrit ci-avant.

Dans le procédé de (co)polymérisation suivant l'invention, la polymérisation peut être effectuée indifféremment en solution, en suspension ou en phase gazeuse et peut être réalisée en continu ou en discontinu, par exemple en effectuant la polymérisation dans un ou plusieurs réacteurs. On peut ainsi avantageusement travailler dans un seul réacteur. Une autre façon de faire consiste à travailler dans plusieurs réacteurs disposés en série, le solide catalytique étant activé dans le premier réacteur et le métallocène dans un réacteur suivant. Le procédé ainsi réalisé s'avère particulièrement performant pour la fabrication de (co)polymères ayant une distribution des poids moléculaires multimodale, en particulier bimodale. Dans la (co)polymérisation on peut éventuellement mettre en oeuvre un régulateur du poids moléculaire tel que l'hydrogène. Une variante du procédé de (co)polymérisation selon l'invention comprend une prépolymérisation en suspension dans un premier réacteur suivie d'une polymérisation en phase gazeuse dans un second réacteur.

Dans le cas d'une (co)polymérisation en suspension, celle-ci est effectuée dans un diluant hydrocarboné tel que ceux utilisables dans la préparation du mélange du métallocène neutre et du dérivé d'aluminium, et à une température telle qu'au moins 50 % (de préférence au moins 70 %) du (co)polymère formé y soit insoluble. La température est généralement au moins égale à 20 °C, de préférence au moins 50 °C; elle est habituellement au maximum égale

à 200 °C, de préférence au maximum 100 °C. La pression partielle d'oléfine est le plus souvent au moins égale à la pression atmosphérique, de préférence ≥ 0,4 MPa, par exemple ≥ 0,6 MPa; cette pression est en général au maximum égale à 5 MPa, de préférence ≤ 2 MPa, par exemple ≤ 1,5 MPa.

Dans le cas d'une (co)polymérisation en solution, celle-ci peut être réalisée dans un diluant hydrocarboné tel que ceux cités ci-avant. La température opératoire dépend du diluant hydrocarboné utilisé et doit être supérieure à la température de dissolution du (co)polymère dans celui-ci, de sorte qu'au moins 50 % (de préférence au moins 70 %) du (co)polymère y soit dissous. Par ailleurs la température doit être suffisamment basse pour empêcher une dégradation thermique du (co)polymère et/ou du système catalytique. En général, la température optimale est de 100 à 200 °C. La pression partielle d'oléfine est le plus souvent au moins égale à la pression atmosphérique, de préférence ≥ 0,4 MPa, par exemple ≥ 0,6 MPa; cette pression est en général au maximum égale à 5 MPa, de préférence ≤ 2 MPa, par exemple ≤ 1,5 MPa. En variante, la (co)polymérisation est effectuée en utilisant l'oléfine elle-même comme diluant hydrocarboné. Dans cette variante on peut utiliser une oléfine liquide dans les conditions normales de pression et de température, ou opérer sous une pression suffisante pour qu'une oléfine normalement gazeuse soit liquéfiée.

Dans le cas où la (co)polymérisation est effectuée en phase gazeuse, on met un courant gazeux comprenant l'oléfine en contact avec le système catalytique dans un lit fluidisé. Dès lors le débit du courant gazeux doit être suffisant pour maintenir le (co)polymère en fluidisation et dépend de la vitesse de formation de celui-ci et de la vitesse à laquelle le système catalytique est consommé. La pression partielle de l'oléfine peut être inférieure ou supérieure à la pression atmosphérique, la pression partielle préférée variant de la pression atmosphérique à environ 7 MPa. En général, une pression de 0,2 à 5 MPa convient bien. Le choix de la température n'est pas critique, celle-ci est en général de 30 à 200 °C. On peut éventuellement utiliser un gaz de dilution qui doit être inerte vis-à-vis du (co)polymère.

Une forme de réalisation particulière du procédé de (co)polymérisation selon l'invention consiste à copolymériser au moins deux oléfines introduites simultanément ou en différé dans le réacteur de polymérisation, les deux oléfines étant de préférence introduites avant l'ajout de l'agent ionisant.

Le procédé de (co)polymérisation selon l'invention est particulièrement performant pour la fabrication d'homopolymères de l'éthylène ou du propylène et de (co)polymères de l'éthylène et/ou du propylène.

Le procédé de (co)polymérisation suivant l'invention réduit les risques de croûtage dans le réacteur de polymérisation et permet l'obtention de (co)polymères présentant au moins une des propriétés avantageuses suivantes :

- une teneur faible en impuretés métalliques provenant du système catalytique,
- une large distribution en poids moléculaire,
- un poids spécifique apparent élevé.

Le procédé de (co)polymérisation selon l'invention permet, en particulier, de produire des (co)polymères présentant les propriétés suivantes :

- une distribution de poids moléculaire ayant un rapport $M_w/M_n$ au moins égal à 10, en général au moins égal à 20, plus particulièrement au moins égal à 30, $M_w$ et $M_n$ désignant respectivement la masse moléculaire moyenne en poids et la masse moléculaire moyenne en nombre du (co)polymère produit,
- un poids spécifique apparent au moins égal à 100 g/dm$^3$, typiquement au moins égal à 120.

Les exemples, dont la description suit, servent à illustrer l'invention. Les exemples 1 à 3 sont conformes à l'invention. Les exemples 4 et 5 sont des exemples comparatifs.

La signification des symboles utilisés dans ces exemples, les unités exprimant les grandeurs mentionnées et les méthodes de mesure de ces grandeurs sont explicitées ci-dessous.

$M_w/M_n$ = rapport entre la masse moléculaire moyenne en poids et la masse moléculaire moyenne en nombre mesuré par chromatographie d'exclusion stérique réalisée dans le 1,2,4-trichlorobenzène à 135 °C sur un chromatographe de la société WATERS type 150 C.

PSA = poids spécifique apparent du (co)polymère exprimé en g/dm$^3$ et mesuré par écoulement libre selon le mode opératoire suivant : dans un récipient cylindrique de 50 cm$^3$ de capacité, on verse la poudre à analyser en évitant de la tasser, depuis une trémie dont le bord inférieur est disposé 20 mm au-dessus du bord supérieur du récipient. On pèse ensuite le récipient rempli de la poudre, on déduit la tare du poids relevé et on multiplie le résultat obtenu (exprimé en g) par 20.

Dans les exemples 1 et 2 conformes à l'invention, on a fabriqué du polyéthylène par un procédé en suspension au moyen d'un système catalytique mixte non supporté, dans lequel le métallocène et le solide catalytique sont activés simultanément.

Exemple 1 (conforme à l'invention) :

(a) préparation du solide catalytique

On a fait réagir du diéthylate de magnésium avec du tétrabutylate de titane en des quantités telles que le rapport molaire de magnésium au titane soit égal à 2. Ensuite, on a chloré et précipité le produit de réaction ainsi obtenu en mettant celui-ci en contact avec une solution de dichlorure d'éthylaluminium. Le solide ainsi obtenu, recueilli de la suspension, comprenait (% en poids) :

Ti : 17,0
Cl : 36,2
Al : 1,9
Mg : 4,5.

(b) mélange du métallocène neutre et du solide catalytique

637 mg d'une poudre de bis(cyclopentadiényl)dichlorozirconium ont été mélangés sous agitation pendant 48 heures dans 20 ml d'hexane avec 1396 mg du solide catalytique obtenu en (a). Le solide recueilli comprenait (% en poids) :

Ti : 11,0
Zr : 9,5
Cl : 26,2
Al : 1,3
Mg : 2,9.

(c) polymérisation de l'éthylène

On a introduit dans un réacteur de trois litres de capacité, muni d'un agitateur, 1 ml d'une solution de 40 g/l de triéthylaluminium et 1 l d'isobutane. Ensuite, on a alimenté le réacteur en éthylène à une pression partielle de 0,8 MPa et en hydrogène à une pression partielle de 0,04 MPa. La température a été amenée à 60 °C. Puis, on y a ajouté 0,0043 g du solide obtenu en (b) et 0,0022 mmol de tétrakis(pentafluorophényl)borate de triphénylcarbénium sous forme de solution dans le toluène. La pression d'éthylène et la température ont été maintenues constantes pendant la durée de polymérisation. Après 90 minutes, le réacteur a été refroidi et dégazé. 55 g de polyéthylène ont été recueillis. Le polymère obtenu présentait les caractéristiques suivantes :

$M_w/M_n$ = 31
PSA = 193.

Exemple 2 (conforme à l'invention) :

(a) préparation du solide catalytique

On a utilisé le même solide catalytique que celui obtenu à l'exemple 1 (a).

(b) mélange du métallocène neutre et du solide catalytique

1197 mg de bis(cyclopentadiényl)dichlorozirconium ont été mélangés sous agitation pendant 48 heures dans 20 ml d'hexane avec 1396 mg du solide catalytique obtenu en (a). Le solide ainsi obtenu comprenait (% en poids) :

Ti : 8,6
Zr : 14,0
Cl : 26,9
Al : 1,0
Mg : 2,3.

(c) polymérisation de l'éthylène

On a introduit dans un réacteur de trois litres, muni d'un agitateur, 1 ml d'une solution de 40 g/l de triéthylaluminium et 1 l d'isobutane. Ensuite, on a alimenté le réacteur en éthylène à une pression partielle de 0,8 MPa et en hydrogène à une pression partielle de 0,04 MPa. La température a été amenée à 60 °C. Puis, on y a ajouté 0,0041 g du solide obtenu en (b) et 0,0022 mmol de tétrakis(pentafluorophényl)borate de triphénylcarbénium sous forme de solution dans le toluène. La pression d'éthylène et la température ont été maintenues constantes pendant la durée de polymérisation. Après 90 minutes, le réacteur a été refroidi et dégazé. 37 g de polyéthylène ont été recueillis. Le polymère obtenu présentait les caractéristiques suivantes :

$M_w/M_n$ = 41.

Exemple 3 (conforme à l'invention) :

Dans cet exemple, on a mis en oeuvre un système catalytique supporté et la polymérisation a été effectuée en deux étapes consécutives.

(a) préparation du solide catalytique :

On a utilisé le même solide catalytique que celui obtenu à l'exemple 1 (a).

(b) préparation et activation du support :

On a calciné de la silice du type MS3040 de la société PQ à 600 °C pendant 16 heures sous air sec et on l'a ensuite mélangée à une quantité de dichlorure de magnésium telle que le mélange comprenne 9,8 % en poids de magnésium. Le mélange a été effectué dans un four rotatif pendant 16 heures à 400 °C sous azote.

(c) mélange du métallocène neutre et du solide catalytique

On a mélangé 3,9 g du support obtenu en (b) avec 0,222 g du solide catalytique obtenu en (a) et 0,430 g d'une poudre de bis(cyclopentadiényl)dichlorozirconium pendant 28 heures à 50 °C.

(d) polymérisation de l'éthylène :

On a introduit dans un réacteur de trois litres, muni d'un agitateur, 1 ml d'une solution de 40 g/l de triéthylaluminium et 1 l d'isobutane. La température a été amenée à 70 °C. Ensuite, on a alimenté le réacteur en éthylène à une pression partielle de 0,6 MPa. Puis, on y a ajouté 89,9 g du solide obtenu en (c). La pression d'éthylène et la température ont été maintenues constantes pendant la durée de polymérisation. Après 10 minutes, le réacteur a été refroidi et dégazé. Ensuite, on a réintroduit 1 l d'isobutane dans le réacteur. La température a été augmentée à 50 °C et on a réalimenté le réacteur en éthylène à une pression partielle de 1 MPa. Ensuite, on y a ajouté 0,0022 mmol de tétrakis(pentafluorophényl)borate de triphénylcarbénium. Après 30 minutes le réacteur a été dégazé et refroidi. Aucune trace de croûtage n'a été retrouvée dans le réacteur de polymérisation. 168 g de polyéthylène ont été recueillis. Le polymère obtenu présentait les caractéristiques suivantes :

PSA = 134.

Exemple 4 (donné à titre de comparaison) :

Dans cet exemple non conforme à l'invention, on a fabriqué du polyéthylène au moyen d'un métallocène supporté selon le procédé décrit dans la demande de brevet EP-500944.

(a) préparation et activation du support :

On a utilisé le même support que celui obtenu à l'exemple 3 (b).

(b) mélange du métallocène neutre avec le support :

On a mélangé 3,8 g du support obtenu en (a) avec 0,354 g d'une poudre de bis(cyclopentadiényl)dichlorozirconium pendant 9 heures à 50 °C.

(c) polymérisation de l'éthylène :

On a introduit dans un réacteur de trois litres, muni d'un agitateur, 1 ml d'une solution de 40 g/l de triéthylaluminium et 1 l d'isobutane. La température a été amenée à 50 °C. Ensuite, on a alimenté le réacteur en éthylène à une pression partielle de 1 MPa. Puis, on y a ajouté 90 mg du solide obtenu en (b) et 0,0022 mmol de tétrakis(pentafluorophényl)borate de triphénylcarbénium. La pression d'éthylène et la température ont été maintenues constantes pendant la durée de polymérisation. Après 23 minutes, le réacteur a été refroidi et dégazé. On a constaté que la paroi du réacteur était couverte d'une fine couche de produit de croûtage. 113 g de polyéthylène ont été recueillis. Le polymère obtenu présentait les caractéristiques suivantes :

PSA = 42,6.

Une comparaison des résultats de l'exemple 4 avec ceux de l'exemple 3 font apparaître le progrès apporté par l'invention pour ce qui concerne le poids spécifique apparent du polymère et les phénomènes de croûtage dans le réacteur de polymérisation.

Exemple 5 (donné à titre de comparaison) :

Dans cet exemple non conforme à l'invention, on a fabriqué du polyéthylène au moyen d'un métallocène supporté selon le procédé décrit dans la demande de brevet EP-500944.

(a) préparation et activation du support :

On a calciné de la silice du type 948 de la société GRACE à 800 °C pendant 16 heures sous balayage d'azote.

(b) mélange du métallocène neutre avec le support :

On a traité 2 g du support obtenu en (a) avec une solution de 232 mg de bis(cyclopentadiényl)dichlorozirconium dans 20 ml de toluène. Ensuite, le toluène a été éliminé par distillation sous pression réduite. Le solide ainsi obtenu a été mis en suspension dans 48 ml d'hexane.

(c) polymérisation de l'éthylène :

On a introduit dans un réacteur de trois litres, muni d'un agitateur, 1 ml d'une solution de 40 g/l de triéthylaluminium et 1 l d'isobutane. La température a été amenée à 60 °C. Ensuite, on a alimenté le réacteur en éthylène à une pression partielle de 0,8 MPa. Puis, on y a ajouté une quantité de la suspension obtenue en (b) contenant 92 mg de solide et 0,0022 mmol de tétrakis(pentafluorophényl)borate de triphénylcarbénium. La pression d'éthylène et la température ont été maintenues constantes pendant la durée de polymérisation. Après 90 minutes, le réacteur a été refroidi et dégazé. On a constaté que la paroi du réacteur était couverte d'une fine couche de produit de croûtage. 56 g de polyéthylène ont été recueillis. Le polymère obtenu présentait la caractéristique suivante :

Mw/Mn = 7,9.

Une comparaison des résultats des exemples 1 et 2 avec ceux de l'exemple 5 font apparaître le progrès apporté par l'invention pour ce qui concerne la distribution des poids moléculaires du polymère obtenu.

## Revendications

1. Système catalytique comprenant (a) au moins un métallocène ionique dérivé d'un métal de transition, (b) au moins un solide catalytique contenant de 15 à 20 % en poids de titane, de 0,5 à 20 % en poids de magnésium et de 30 à 40 % en poids de chlore, et (c) au moins un dérivé d'aluminium de formule générale $AlX_nT_{3-n}$ dans laquelle X désigne un halogène, T désigne un radical hydrocarboné pouvant éventuellement comprendre de l'oxygène et n est un nombre de 0 à 3.

2. Système catalytique selon la revendication 1, caractérisé en ce que le métallocène ionique est dérivé d'un métallocène neutre de formule$(C_p)_a(C_p')_bMX_xZ_z$, dans laquelle :

   - $C_p$ et Cp' désignent chacun un radical hydrocarboné insaturé coordiné à un atome central, les groupes $C_p$ et $C_p'$ pouvant être liés par un pont covalent
   - M désigne le métal de transition qui est choisi parmi les groupes IIIB, IVB, VB et VIB du tableau périodique
   - a, b, x et z désignent des nombres entiers tels que $(a + b + x + z) = m$, $x \geq 0$, $z \geq 0$ et a et/ou $b \neq 0$

- m désigne la valence du métal de transition M
- X désigne un halogène,
- Z désigne un radical hydrocarboné pouvant éventuellement comprendre de l'oxygène ou un radical silyl de formule ($-R_t$-Si-R'R''R''') où
- R désigne un groupe alkyle, alkényle, aryle, alkoxy ou cycloalkyle éventuellement substitué, comprenant jusqu'à 20 atomes de carbone,
- R', R'' et R''' sont identiques ou différents et désignent chacun un halogène ou un groupe alkyle, alkényle, aryle, alkoxy ou cycloalkyle éventuellement substitué, comprenant jusqu'à 20 atomes de carbone, et
- t désigne 0 ou 1.

**3.** Système catalytique selon la revendication 1 ou 2, caractérisé en ce que le métal de transition est le zirconium.

**4.** Système catalytique selon l'une quelconque des revendications 1 à 3, caractérisé en ce que le rapport pondéral du métal de transition au titane du solide catalytique est de 0,05 à 10.

**5.** Système catalytique selon l'une quelconque des revendications 1 à 4, caractérisé en ce qu'il comprend en outre un support minéral.

**6.** Système catalytique selon l'une quelconque des revendications 1 à 5, caractérisé en ce que le métallocène ionique est le produit issu du mélange d'un métallocène neutre avec le tétrakis(pentafluorophényl)borate de triphénylcarbénium.

**7.** Système catalytique selon l'une quelconque des revendications 1 à 5, caractérisé en ce que le métallocène ionique est le produit issu du mélange d'un métallocène neutre avec un agent ionisant choisi parmi le groupe contenant le tri(pentafluorophényl)bore, le triphénylbore, le triméthylbore, le tri(triméthylsilyl)borate et les organoboroxines.

**8.** Utilisation d'un système catalytique conforme à l'une quelconque des revendications 1 à 7 pour la (co)polymérisation d'au moins une oléfine.

**9.** Procédé de préparation d'un système catalytique comprenant au moins un dérivé d'aluminium de formule générale $AlX_nT_{3-n}$, dans laquelle X désigne un halogène, T désigne un radical hydrocarboné pouvant éventuellement comprendre de l'oxygène et n est un nombre de 0 à 3, au moins un agent ionisant et au moins un métallocène neutre dérivé d'un métal de transition, caractérisé en ce que, dans une première étape, on prépare un mélange du métallocène neutre avec un solide catalytique contenant de 15 à 20 % en poids de titane, de 0,5 à 20 % en poids de magnésium et de 30 à 40 % en poids de chlore et, dans une deuxième étape, on ajoute au mélange ainsi obtenu le dérivé d'aluminium dans au moins un diluant hydrocarboné et l'agent ionisant.

**10.** Procédé selon la revendication 9, caractérisé en ce qu'on sélectionne un métallocène neutre halogéné et en ce que, dans la deuxième étape, on ajoute d'abord le dérivé d'aluminium au mélange recueilli de la première étape, puis l'agent ionisant.

**11.** Procédé selon la revendication 9 ou 10, caractérisé en ce que le dérivé d'aluminium est choisi parmi ceux dont le groupe T est un radical hydrocarboné choisi parmi les groupes alkyle, alkényle, aryle et alkoxy, éventuellement substitués, contenant jusqu'à 20 atomes de carbone.

**12.** Procédé selon l'une quelconque des revendications 9 à 11, caractérisé en ce que le dérivé d'aluminium est choisi parmi le triéthylaluminium et le triisobutylaluminium.

**13.** Procédé selon l'une quelconque des revendications 9 à 12, caractérisé en ce que le dérivé d'aluminium, le métallocène neutre, le solide catalytique et l'agent ionisant sont mis en oeuvre en quantités telles que le rapport molaire de l'agent ionisant au métallocène neutre soit de 0,1 à 10, le rapport molaire du dérivé d'aluminium au métallocène neutre soit au moins égal à 10 et le rapport pondéral du métallocène neutre au solide catalytique soit au moins égal à 0,01 et au maximum égal à 20.

**14.** Procédé selon l'une quelconque des revendications 9 à 13, caractérisé en ce que l'agent ionisant est sélectionné parmi le tétrakis(pentafluorophényl)borate de triphénylcarbénium et le tri(pentafluorophényl)bore.

**15.** Procédé selon la revendication 14 caractérisé en ce que le tri(pentafluorophényl)bore est mis en oeuvre en l'absence d'un acide de Brönsted.

**16.** Procédé selon l'une quelconque des revendications 9 à 15, caractérisé en ce que le métallocène neutre ou l'agent ionisant est déposé sur un support minéral.

**17.** Procédé selon l'une quelconque des revendications 9 à 16, caractérisé en ce qu'on sélectionne le métallocène neutre parmi les composés de formule $(C_p)_a(C_p')_bMX_x(-R_t\text{-}Si\text{-}R'R''R''')_z$, dans laquelle :

- $C_p$ et Cp' désignent chacun un radical hydrocarboné insaturé coordiné à un atome central, les groupes $C_p$ et $C_p'$ pouvant être liés par un pont covalent
- M désigne le métal de transition qui est choisi parmi les groupes IIIB, IVB, VB et VIB du tableau périodique
- a, b, x et z désignent des nombres entiers tels que $(a + b + x + z) = m$, $x \geq 0$, $z > 0$ et a et/ou $b \neq 0$
- m désigne la valence du métal de transition M
- X désigne un halogène,
- R désigne un groupe alkyle, alkényle, aryle, alkoxy ou cycloalkyle éventuellement substitué, comprenant jusqu'à 20 atomes de carbone
- R', R'' et R''' sont identiques ou différents et désignent chacun un halogène ou un groupe alkyle, alkényle, aryle, alkoxy ou cycloalkyle éventuellement substitué, comprenant jusqu'à 20 atomes de carbone, et
- t désigne 0 ou 1,

préparé en faisant réagir un composé de formule $(C_p)_a(C_p')_bMX_xH_z$ avec un silane.

**18.** Procédé selon l'une quelconque des revendications 9 à 16, caractérisé en ce qu'on sélectionne le métallocène neutre parmi les composés de formule $(C_p)a(C_p')_bMX_xZ_z$, dans laquelle :

- $C_p$ et Cp' désignent chacun un radical hydrocarboné insaturé coordiné à un atome central, les groupes $C_p$ et $C_p'$ pouvant être liés par un pont covalent
- M désigne le métal de transition qui est choisi parmi les groupes IIIB, IVB, VB et VIB du tableau périodique
- a, b, x et z désignent des nombres entiers tels que $(a + b + x + z) = m$, $x \geq 0$, $z > 0$ et a et/ou $b \neq 0$
- m désigne la valence du métal de transition M
- X désigne un halogène, et
- Z désigne un radical hydrocarboné,

préparé en faisant réagir un composé de formule $(C_p)_a(C_p')_bMX_xH_z$ avec une oléfine.

**19.** Procédé selon la revendication 18, caractérisé en ce que l'oléfine est l'éthylène.

**20.** Précurseur d'un système catalytique comprenant (a) au moins un métallocène neutre dérivé d'un métal de transition, (b) au moins un solide catalytique contenant de 15 à 20 % en poids de titane, de 0,5 à 20 % en poids de magnésium et de 30 à 40 % en poids de chlore, et (c) au moins un dérivé d'aluminium de formule générale $AlX_nT_{3-n}$ dans laquelle X désigne un halogène, T désigne un radical hydrocarboné pouvant éventuellement comprendre de l'oxygène, et n est un nombre de 0 à 3.

**21.** Procédé de (co)polymérisation d'au moins une oléfine en présence d'un système catalytique comprenant au moins un dérivé d'aluminium de formule générale $AlX_nT_{3-n}$, dans laquelle X désigne un halogène, T désigne un radical hydrocarboné pouvant éventuellement comprendre de l'oxygène et n est un nombre de 0 à 3, au moins un agent ionisant et au moins un métallocène neutre dérivé d'un métal de transition, caractérisé en ce qu'on prépare un mélange du métallocène neutre avec un solide catalytique contenant de 15 à 20 % en poids de titane, de 0,5 à 20 % en poids de magnésium et de 30 à 40 % en poids de chlore, on met le mélange ainsi obtenu en contact avec au moins un diluant hydrocarboné, le dérivé d'aluminium et l'oléfine, et on y ajoute l'agent ionisant.

**22.** Procédé selon la revendication 21, caractérisé en ce que le diluant hydrocarboné est choisi parmi les hydrocarbures aliphatiques.

**23.** Procédé selon la revendication 21 ou 22, caractérisé en ce que le dérivé d'aluminium et le métallocène neutre sont mis en oeuvre en quantités telles que le rapport molaire du dérivé d'aluminium au métallocène neutre soit au moins égal à 100.

**24.** Procédé selon l'une quelconque des revendications 21 à 23, caractérisé en ce que le métallocène neutre et le solide catalytique sont mis en oeuvre en quantités telles que le rapport pondéral du métallocène neutre au solide catalytique soit au moins égal à 0,1 et au maximum égal à 10.

**25.** Procédé selon l'une quelconque des revendications 21 à 24, caractérisé en ce que le solide catalytique est mélangé à un support minéral, le métallocène neutre étant ensuite ajouté à ce mélange.

**26.** Procédé selon l'une quelconque des revendications 16 à 25, caractérisé en ce que le support minéral est de la silice, de l'alumine, du chlorure de magnésium ou un mélange de silice et de chlorure de magnésium.

**27.** Procédé selon l'une quelconque des revendications 21 à 26, caractérisé en ce que l'oléfine est l'éthylène et/ou le propylène.

**Patentansprüche**

**1.** Katalytisches System, das (a) wenigstens ein von einem Übergangsmetall abgeleitetes ionisches Metallocen, (b) wenigstens einen katalytischen Feststoff, der 15 bis 20 Gew.-% Titan, 0.5 bis 20 Gew.-% Magnesium und 30 bis 40 Gew.-% Chlor enthält, und (c) wenigstens ein Aluminiumderivat der allgemeinen Formel $AlX_nT_{3-n}$, in der X ein Halogen bezeichnet, T einen Kohlenwasserstoffrest, der gegebenenfalls Sauerstoff umfassen kann, bezeichnet und n eine Zahl von 0 bis 3 ist, umfaßt.

**2.** Katalytisches System gemäß Anspruch 1, dadurch gekennzeichnet, daß das ionische Metallocen von einem neutralen Metallocen der Formel $(C_p)_a(C_p')_bMX_xZ_z$ abgeleitet ist, in der:

- $C_p$ und $C_p'$ jeweils einen ungesättigten Kohlenwasserstoffrest bezeichnen, der an ein Zentralatom koordiniert ist, wobei die Gruppen $C_p$ und $C_p'$ durch eine kovalente Brücke verbunden sein können,
- M das Übergangsmetall bezeichnet, das unter den Gruppen IIIB, IVB. VB und VIB des Periodensystems ausgewählt ist,
- a, b, x und z solche ganze Zahlen bezeichnen, daß $(a + b + x + z) = m$, $x \geq 0$, $z \geq 0$ und a und/oder $b \neq 0$,
- m die Wertigkeit des Übergangsmetalls M bezeichnet,
- X ein Halogen bezeichnet,
- Z einen Kohlenwasserstoffrest, der gegebenenfalls Sauerstoff umfassen kann, oder einen Silylrest der Formel ($-R_t$-Si-R'R''R''') bezeichnet, worin
- R eine gegebenenfalls substituierte Alkyl-, Alkenyl-, Aryl-, Alkoxy- oder Cycloalkylgruppe, die bis zu 20 Kohlenstoffatome umfaßt, bezeichnet,
- R', R'' und R''' gleich oder verschieden sind und jeweils ein Halogen oder eine gegebenenfalls substituierte Alkyl-, Alkenyl-. Aryl-, Alkoxy- oder Cycloalkylgruppe, die bis zu 20 Kohlenstoffatome umfaßt, bezeichnen und
- t 0 oder 1 bezeichnet.

**3.** Katalytisches System gemäß Anspruch 1 oder 2, dadurch gekennzeichnet, daß das Übergangsmetall Zirkonium ist.

**4.** Katalytisches System gemäß einem der Ansprüche 1 bis 3, dadurch gekennzeichnet, daß das Gewichtsverhältnis des Übergangsmetalls zu dem Titan des katalytischen Feststoffs 0,05 bis 10 ist.

**5.** Katalytisches System gemäß einem der Ansprüche 1 bis 4, dadurch gekennzeichnet, daß es außerdem einen mineralischen Träger umfaßt.

**6.** Katalytisches System gemäß einem der Ansprüche 1 bis 5, dadurch gekennzeichnet, daß das ionische Metallocen das Produkt ist, das aus dem Mischen eines neutralen Metallocens mit Triphenylcarbenium-tetrakis(pentafluorphenyl)borat hervorgegangen ist.

**7.** Katalytisches System gemäß einem der Ansprüche 1 bis 5, dadurch gekennzeichnet, daß das ionische Metallocen das Produkt ist, das aus dem Mischen eines neutralen Metallocens mit einem Ionisierungsmittel, das aus der Gruppe ausgewählt ist, die Tri(pentafluorphenyl)boran, Triphenylboran. Trimethylboran, Tri(trimethylsilyl)borat und die Organoboroxine enthält, hervorgegangen ist.

8. Verwendung eines katalytischen Systems gemäß einem der Ansprüche 1 bis 7 für die (Co)polymerisation wenigstens eines Olefins.

9. Verfahren zur Herstellung eines katalytischen Systems, das wenigstens ein Aluminiumderivat der allgemeinen Formel $AlX_nT_{3-n}$, in der X ein Halogen bezeichnet, T einen Kohlenwasserstoffrest, der gegebenenfalls Sauerstoff umfassen kann, bezeichnet und n eine Zahl von 0 bis 3 ist, wenigstens ein Ionisierungsmittel und wenigstens ein neutrales Metallocen, das von einem Übergangsmetall abgeleitet ist, umfaßt, dadurch gekennzeichnet, daß man in einem ersten Schritt ein Gemisch des neutralen Metallocens mit einem katalytischen Feststoff, der 15 bis 20 Gew.-% Titan, 0,5 bis 20 Gew.-% Magnesium und 30 bis 40 Gew.-% Chlor enthält, herstellt und man in einem zweiten Schritt zu dem so erhaltenen Gemisch das Aluminiumderivat in wenigstens einem Kohlenwasserstoffverdünnungsmittel und das Ionisierungsmittel hinzufügt.

10. Verfahren gemäß Anspruch 9, dadurch gekennzeichnet, daß man ein halogenhaltiges neutrales Metallocen auswählt, und dadurch, daß man im zweiten Schritt zuerst das Aluminiumderivat zu dem im ersten Schritt gewonnenen Gemisch, dann das Ionisierungsmittel hinzufügt.

11. Verfahren gemäß Anspruch 9 oder 10, dadurch gekennzeichnet, daß das Aluminiumderivat unter denjenigen ausgewählt ist, deren Gruppe T ein Kohlenwasserstoffrest ist, der unter den gegebenenfalls substituierten Alkyl-, Alkenyl-, Aryl- und Alkoxygruppen, die bis zu 20 Kohlenstoffatome umfassen, ausgewählt ist.

12. Verfahren gemäß einem der Ansprüche 9 bis 11, dadurch gekennzeichnet, daß das Aluminiumderivat unter Triethylaluminium und Triisobutylaluminium ausgewählt ist.

13. Verfahren gemäß einem der Ansprüche 9 bis 12. dadurch gekennzeichnet, daß das Aluminiumderivat, das neutrale Metallocen. der katalytische Feststoff und das Ionisierungsmittel in solchen Mengen eingesetzt werden, daß das Molverhältnis des Ionisierungsmittels zu dem neutralen Metallocen 0,1 bis 10 ist, das Molverhältnis des Aluminiumderivats zu dem neutralen Metallocen wenigstens gleich 10 ist und das Gewichtsverhältnis des neutralen Metallocens zu dem katalytischen Feststoff wenigstens gleich 0,01 und höchstens gleich 20 ist.

14. Verfahren gemäß einem der Ansprüche 9 bis 13, dadurch gekennzeichnet, daß das Ionisierungsmittel unter Triphenylcarbenium-tetrakis(pentafluorphenyl)borat und Tri(pentafluorphenyl)boran ausgewählt ist.

15. Verfahren gemäß Anspruch 14, dadurch gekennzeichnet, daß das Tri(pentafluorphenyl)boran in Abwesenheit einer Brönsted-Säure eingesetzt wird.

16. Verfahren gemäß einem der Ansprüche 9 bis 15, dadurch gekennzeichnet, daß das neutrale Metallocen oder das Ionisierungsmittel auf einem mineralischen Träger abgeschieden wird.

17. Verfahren gemäß einem der Ansprüche 9 bis 16, dadurch gekennzeichnet, daß man das neutrale Metallocen unter den Verbindungen der Formel $(C_p)_a(C_p')_bMX_x(-R_t-Si-R'R''R''')_z$ auswählt, in der:

- $C_p$ und $C_p'$ jeweils einen ungesättigten Kohlenwasserstoffrest bezeichnen, der an ein Zentralatom koordiniert ist, wobei die Gruppen $C_p$ und $C_p'$ durch eine kovalente Brücke verbunden sein können,
- M das Übergangsmetall bezeichnet, das unter den Gruppen IIIB, IVB, VB und VIB des Periodensystems ausgewählt ist,
- a, b, x und z solche ganze Zahlen bezeichnen, daß $(a + b + x + z) = m$, $x \geq 0$, $z > 0$ und a und/oder $b \neq 0$,
- m die Wertigkeit des Übergangsmetalls M bezeichnet,
- X ein Halogen bezeichnet,
- R eine gegebenenfalls substituierte Alkyl-, Alkenyl-, Aryl-, Alkoxy- oder Cycloalkylgruppe, die bis zu 20 Kohlenstoffatome umfaßt, bezeichnet,
- R', R'' und R''' gleich oder verschieden sind und jeweils ein Halogen oder eine gegebenenfalls substituierte Alkyl-, Alkenyl-, Aryl-, Alkoxy- oder Cycloalkylgruppe, die bis zu 20 Kohlenstoffatome umfaßt, bezeichnen und
- t 0 oder 1 bezeichnet,

das hergestellt wird, indem man eine Verbindung der Formel $(C_p)_a(C_p')_bMX_xH_z$ mit einem Silan umsetzt.

18. Verfahren gemäß einem der Ansprüche 9 bis 16, dadurch gekennzeichnet, daß man das neutrale Metallocen unter den Verbindungen der Formel $(C_p)_a(C_p')_bMX_xZ_z$ auswählt, in der:

- $C_p$ und $C_p'$ jeweils einen ungesättigten Kohlenwasserstoffrest bezeichnen, der an ein Zentralatom koordiniert ist, wobei die Gruppen $C_p$ und $C_p'$ durch eine kovalente Brücke verbunden sein können,
- M das Übergangsmetall bezeichnet, das unter den Gruppen IIIB, IVB, VB und VIB des Periodensystems ausgewählt ist,
- a, b, x und z solche ganze Zahlen bezeichnen, daß $(a + b + x + z) = m$, $x \geq 0$, $z > 0$ und a und/oder $b \neq 0$,
- m die Wertigkeit des Übergangsmetalls M bezeichnet,
- X ein Halogen bezeichnet und
- Z einen Kohlenwasserstoffrest bezeichnet,

das hergestellt wird, indem man eine Verbindung der Formel $(C_p)_a(C_p')_bMX_xH_z$ mit einem Olefin umsetzt.

**19.** Verfahren gemäß Anspruch 18, dadurch gekennzeichnet, daß das Olefin Ethylen ist.

**20.** Vorstufe eines katalytischen Systems, das (a) wenigstens ein von einem Übergangsmetall abgeleitetes neutrales Metallocen, (b) wenigstens einen katalytischen Feststoff, der 15 bis 20 Gew.-% Titan. 0,5 bis 20 Gew.-% Magnesium und 30 bis 40 Gew.-% Chlor enthält, und (c) wenigstens ein Aluminiumderivat der allgemeinen Formel $AlX_nT_{3-n}$, in der X ein Halogen bezeichnet, T einen Kohlenwasserstoffrest, der gegebenenfalls Sauerstoff umfassen kann, bezeichnet und n eine Zahl von 0 bis 3 ist, umfaßt.

**21.** Verfahren zur (Co)polymerisation wenigstens eines Olefins in Gegenwart eines katalytischen Systems, das wenigstens ein Aluminiumderivat der allgemeinen Formel $AlX_nT_{3-n}$, in der X ein Halogen bezeichnet, T einen Kohlenwasserstoffrest, der gegebenenfalls Sauerstoff umfassen kann, bezeichnet und n eine Zahl von 0 bis 3 ist, wenigstens ein Ionisierungsmittel und wenigstens ein von einem Übergangsmetall abgeleitetes neutrales Metallocen umfaßt, dadurch gekennzeichnet, daß man ein Gemisch des neutralen Metallocens mit einem katalytischen Feststoff, der 15 bis 20 Gew.-% Titan, 0,5 bis 20 Gew.-% Magnesium und 30 bis 40 Gew.-% Chlor enthält, herstellt, man das so erhaltene Gemisch mit wenigstens einem Kohlenwasserstoffverdünnungsmittel, dem Aluminiumderivat und dem Olefin in Kontakt bringt und man dazu das Ionisierungsmittel hinzufügt.

**22.** Verfahren gemäß Anspruch 21, dadurch gekennzeichnet, daß das Kohlenwasserstoffverdünnungsmittel unter den aliphatischen Kohlenwasserstoffen ausgewählt ist.

**23.** Verfahren gemäß Anspruch 21 oder 22, dadurch gekennzeichnet, daß das Aluminiumderivat und das neutrale Metallocen in solchen Mengen eingesetzt werden, daß das Molverhältnis des Aluminiumderivats zu dem neutralen Metallocen wenigstens gleich 100 ist.

**24.** Verfahren gemäß einem der Ansprüche 21 bis 23, dadurch gekennzeichnet, daß das neutrale Metallocen und der katalytische Feststoff in solchen Mengen eingesetzt werden, daß das Gewichtsverhältnis des neutralen Metallocens zu dem katalytischen Feststoff wenigstens gleich 0,1 und höchstens gleich 10 ist.

**25.** Verfahren gemäß einem der Ansprüche 21 bis 24, dadurch gekennzeichnet, daß der katalytische Feststoff mit einem mineralischen Träger gemischt wird, wobei das neutrale Metallocen anschließend zu diesem Gemisch hinzugefügt wird.

**26.** Verfahren gemäß einem der Ansprüche 16 bis 25, dadurch gekennzeichnet, daß der mineralische Träger Siliciumdioxid, Aluminiumoxid, Magnesiumchlorid oder ein Gemisch aus Siliciumdioxid und Magnesiumchlorid ist.

**27.** Verfahren gemäß einem der Ansprüche 21 bis 26, dadurch gekennzeichnet, daß das Olefin Ethylen und/oder Propylen ist.

## Claims

**1.** Catalyst system comprising (a) at least one ionic metallocene derived from a transition metal, (b) at least one catalytic solid containing from 15 to 20 % by weight of titanium, from 0.5 to 20 % by weight of magnesium and from 30 to 40 % by weight of chlorine, and (c) at least one aluminium derivative of general formula $AlX_nT_{3-n}$ in which X denotes a halogen, T denotes a hydrocarbon radical which may optionally include oxygen and n is a number from 0 to 3.

**2.** Catalyst system according to Claim 1, characterized in that the ionic metallocene is derived from a neutral metallocene of formula

$$(C_p)_a(C_{p'})_bMX_xZ_z,$$

in which:

- each of $C_p$ and $C_{p'}$ denotes an unsaturated hydrocarbon radical coordinated to a central atom, it being possible for the groups $C_p$ and $C_{p'}$ to be bonded by a covalent bridge
- M denotes the transition metal chosen from groups IIIB, IVB, VB and VIB of the Periodic Table
- a, b, x and z denote integers such that

$$(a + b + x + z) = m, x \geq 0, z \geq 0 \text{ and a and/or } b \neq 0$$

- m denotes the valency of the transition metal M
- X denotes a halogen,
- Z denotes a hydrocarbon radical which may optionally contain oxygen or a silyl radical of formula

$$(-R_t\text{-Si-}R'R''R''')$$

where
- R denotes an optionally substituted alkyl, alkenyl, aryl, alkoxy or cycloalkyl group containing up to 20 carbon atoms,
- R', R" and R"' are identical or different and each denotes a halogen or an optionally substituted alkyl, alkenyl, aryl, alkoxy or cycloalkyl group containing up to 20 carbon atoms, and
- t denotes 0 or 1.

**3.** Catalyst system according to Claim 1 or 2, characterized in that the transition metal is zirconium.

**4.** Catalyst system according to any one of Claims 1 to 3, characterized in that the weight ratio of the transition metal to the titanium of the catalytic solid is from 0.05 to 10.

**5.** Catalyst system according to any one of Claims 1 to 4, characterized in that it additionally includes an inorganic support.

**6.** Catalyst system according to any one of Claims 1 to 5, characterized in that the ionic metallocene is the product resulting from the mixing of a neutral metallocene with triphenylcarbenium tetrakis(pentafluorophenyl)borate.

**7.** Catalyst system according to any one of Claims 1 to 5, characterized in that the ionic metallocene is the product resulting from the mixing of a neutral metallocene with an ionizing agent chosen from the group containing tris (pentafluorophenyl)boron, triphenylboron, trimethylboron, tris(trimethylsilyl) borate and organoboroxines.

**8.** Use of a catalyst system in accordance with any one of Claims 1 to 7 for the (co)polymerization of at least one olefin.

**9.** Process for preparing a catalyst system comprising at least one aluminium derivative of general formula $AlX_nT_{3-n}$, in which X denotes a halogen, T denotes a hydrocarbon radical which may optionally include oxygen and n is a number from 0 to 3, at least one ionizing agent and at least one neutral metallocene derived from a transition metal, characterized in that, in a first stage, a mixture is prepared of the neutral metallocene with a catalytic solid comprising from 15 to 20 % by weight of titanium, from 0.5 to 20 % by weight of magnesium and from 30 to 40 % by weight of chlorine, and, in a second stage, the aluminium derivative in at least one hydrocarbon diluent and the ionizing agent are added to the mixture thus obtained.

**10.** Process according to Claim 9, characterized in that a halogenated neutral metallocene is selected and in that, in the second stage, the aluminium derivative is added first of all to the mixture collected from the first stage, and then the ionizing agent.

**11.** Process according to Claim 9 or 10, characterized in that the aluminium derivative is chosen from those in which the group T is a hydrocarbon radical chosen from optionally substituted alkyl, alkenyl, aryl and alkoxy groups containing up to 20 carbon atoms.

**12.** Process according to any one of Claims 9 to 11, characterized in that the aluminium derivative is chosen from triethylaluminium and triisobutylaluminium.

**13.** Process according to any one of Claims 9 to 12, characterized in that the aluminium derivative, the neutral metallocene, the catalytic solid and the ionizing agent are used in quantities such that the molar ratio of the ionizing agent to the neutral metallocene is from 0.1 to 10, the molar ratio of the aluminium derivative to the neutral metallocene is at least 10 and the weight ratio of the neutral metallocene to the catalytic solid is at least 0.01 and not greater than 20.

**14.** Process according to any one of Claims 9 to 13, characterized in that the ionizing agent is selected from triphenylcarbenium tetrakis(pentafluorophenyl)borate and tris(pentafluorophenyl)boron.

**15.** Process according to Claim 14, characterized in that tris(pentafluorophenyl)boron is used in the absence of a Brönsted acid.

**16.** Process according to any one of Claims 9 to 15, characterized in that the neutral metallocene or the ionizing agent is deposited on an inorganic support.

**17.** Process according to any one of Claims 9 to 16, characterized in that the neutral metallocene is selected from the compounds of formula

$$(C_p)_a(C_p')_bMX_x(\text{-}R_t\text{-Si-}R'R''R''')_z$$

in which:

- each of $C_p$ and $C_{p'}$ denotes an unsaturated hydrocarbon radical coordinated to a central atom, it being possible for the groups $C_p$ and $C_{p'}$ to be bonded by a covalent bridge
- M denotes the transition metal which is chosen from groups IIIB, IVB, VB and VIB of the Periodic Table
- a, b, x and z denote integers such that

$$(a + b + x + z) = m,\ x \geq 0,\ z > 0 \text{ and a and/or b} \neq 0$$

- m denotes the valency of the transition metal M
- X denotes a halogen,
- R denotes an optionally substituted alkyl, alkenyl, aryl, alkoxy or cycloalkyl group containing up to 20 carbon atoms,
- R', R'' and R''' are identical or different and each denotes a halogen or an optionally substituted alkyl, alkenyl, aryl, alkoxy or cycloalkyl group containing up to 20 carbon atoms, and
- t denotes 0 or 1,

prepared by reacting a compound of formula $(C_p)_a(C_{p'})_bMX_xH_z$ with a silane.

**18.** Process according to any one of Claims 9 to 16, characterized in that the neutral metallocene is selected from the compounds of formula

$$(C_p)_a(C_{p'})_bMX_xZ_z$$

in which:

- each of $C_p$ and $C_{p'}$ denotes an unsaturated hydrocarbon radical coordinated to a central atom, it being possible for the groups $C_p$ and $C_{p'}$ to be bonded by a covalent bridge

- M denotes the transition metal which is chosen from groups IIIB, IVB, VB and VIB of the Periodic Table
- a, b, x and z denote integers such that

$$(a + b + x + z) = m,\ x \geq 0,\ z > 0 \text{ and a and/or b} \neq 0$$

- m denotes the valency of the transition metal M
- X denotes a halogen, and
- Z denotes a hydrocarbon radical,

prepared by reacting a compound of formula $(C_p)_a(C_{p'})_bMX_xH_z$ with an olefin.

**19.** Process according to Claim 18, characterized in that the olefin is ethylene.

**20.** Precursor of a catalyst system comprising (a) at least one neutral metallocene derived from a transition metal, (b) at least one catalytic solid containing from 15 to 20 % by weight of titanium, from 0.5 to 20 % by weight of magnesium and from 30 to 40 % by weight of chlorine, and (c) at least one aluminium derivative of general formula $AlX_nT_{3-n}$ in which X denotes a halogen, T denotes a hydrocarbon radical which may optionally include oxygen, and n is a number from 0 to 3.

**21.** Process for (co)polymerization of at least one olefin in the presence of a catalyst system comprising at least one aluminium derivative of general formula $AlX_nT_{3-n}$ in which X denotes a halogen, T denotes a hydrocarbon radical which may optionally include oxygen and n is a number from 0 to 3, at least one ionizing agent and at least one neutral metallocene derived from a transition metal, characterized in that a mixture is prepared of the neutral metallocene with a catalytic solid containing from 15 to 20 % by weight of titanium, from 0.5 to 20 % by weight of magnesium and from 30 to 40 % by weight of chlorine, the mixture thus obtained is placed in contact with at least one hydrocarbon diluent, the aluminium derivative and the olefin, and the ionizing agent is added to it.

**22.** Process according to Claim 21, characterized in that the hydrocarbon diluent is chosen from aliphatic hydrocarbons.

**23.** Process according to Claim 21 or 22, characterized in that the aluminium derivative and the neutral metallocene are used in quantities such that the molar ratio of the aluminium derivative to the neutral metallocene is at least 100.

**24.** Process according to any one of Claims 21 to 23, characterized in that the neutral metallocene and the catalytic solid are used in quantities such that the weight ratio of the neutral metallocene to the catalytic solid is at least 0.1 and not greater than 10.

**25.** Process according to any one of Claims 21 to 24, characterized in that the catalytic solid is mixed with an inorganic support, the neutral metallocene being subsequently added to this mixture.

**26.** Process according to any one of Claims 16 to 25, characterized in that the inorganic support is silica, alumina, magnesium chloride or a mixture of silica and magnesium chloride.

**27.** Process according to any one of Claims 21 to 26, characterized in that the olefin is ethylene and/or propylene.